# EUROPÄISCHE PATENTANMELDUNG

(11) **EP 1 262 904 A2**
(43) Veröffentlichungstag der Anmeldung: **04.12.2002**
(21) Anmeldenummer: 02010548.2
(22) Anmeldetag: 10.05.2002
(51) Int. Cl.: G06K 7/10

(54) **Optoelektronische Vorrichtung mit Schnittstelle für Niederspannungsschaltgeräte**

(30) Priorität: 30.05.2001 DE 10126154
(71) Anmelder: Leuze electronic GmbH, D-73277 Owen (DE)
(72) Erfinder: Wörner, Jörg, 73235 Weilheim (DE); Claus, Armin, 76622 Nürtingen (DE)
(74) Vertreter: Ruckh, Rainer Gerhard, Dr.

(57) **Zusammenfassung**

Die Erfindung betrifft eine optoelektronische Vorrichtung (1) zur Erfassung von Marken innerhalb eines Lesebereichs (L) mit wenigstens einem Sendelichtstrahlen (3) emittierenden Sender (4) und wenigstens einem Empfangslichtstrahlen (5) empfangenden Empfänger (6). Die Sendelichtstrahlen (3) sind auf die Marken gerührt. Die an den Marken zurückreflektierten Empfangssignale treffen auf den Empfänger (6). Die dadurch generierten Empfangssignale am Ausgang des Empfängers werden zur Erfassung der Marken einer Auswerteeinheit (10) zugeführt. Zur Ankopplung an externe Einheiten ist eine Schnittstelle für Niederspannungsschaltgeräte vorgesehen.

## Beschreibung

Die Erfindung betrifft eine optoelektronische Vorrichtung gemäß dem Oberbegriff des Anspruchs 1.

Bekannte Vorrichtungen dieser Art dienen zur Erfassung von Marken mit definierten Kontrastmustem. Insbesondere werden derartige optoelektronische Vorrichtungen zur Detektion von Barcodes eingesetzt.

Dabei werden die Marken innerhalb eines vorgegebenen Lesebereichs erfasst. Die Vorrichtung weist hierzu einen Sendelichtstrahlen emittierenden Sender und einen Empfangslichtstrahlen empfangenden Empfänger auf.

Die vom Sender emittierten Sendelichtstrahlen werden über die Marke geführt. Die an der Marke reflektierten und zum Empfänger geführten Empfangslichtstrahlen weisen eine dem Kontrastmuster der Marke entsprechende Amplitudenmodulation auf. Die Erfassung der Marke erfolgt in einer an den Empfänger angeschlossenen Auswerteeinheit dadurch, dass die Amplitudenmodulation des am Ausgang des Empfängers anstehenden Empfangssignals, welches durch die auf den Empfänger auftreffenden Empfangslichtstrahlen generiert wird, ausgewertet wird.

Ein typisches Einsatzgebiet derartiger optoelektronischer Vorrichtungen ist das Gebiet der Förder- und Automatisierungstechnik. Dort werden Objekte auf Förderstrecken transportiert, wobei auf die Oberflächen der Objekte Marken, insbesondere Barcodes, aufgebracht sind. Die Marken dienen insbesondere zur Identifikation der einzelnen Objekte.

An derartigen Förderstrecken ist eine vorgegebene Anzahl von optoelektronischen Vorrichtungen montiert, welche zur Detektion der Marken an vorgegebenen Erfassungsorten dienen.

Zusätzlich muss eine Zuordnung der erfassten Marken zu den jeweiligen Objekten, auf welchen die einzelnen Marken aufgebracht sind, erfolgen.

Hierzu können optische Sensoren, insbesondere Lichtschranken, vorgesehen sein, mittels derer eine Triggerung der Erfassung der Marken erfolgt. Im einfachsten Fall ist eine einzelne Lichtschranke an der Förderstrecke in Förderrichtung unmittelbar vor einer optoelektronischen Vorrichtung montiert.

Dabei wird durch ein auf der Förderstrecke transportiertes Objekt der Strahlengang der Lichtschranke unterbrochen. Dadurch wird in der Lichtschranke ein Triggersignal an die optoelektronische Vorrichtung weitergegeben, anhand dessen die darauf folgende Erfassung dieser Marke dem mit der Lichtschranke erfassten Objekt zugeordnet wird.

Um den Verkabelungsaufwand für derartige Anordnungen in Grenzen zu halten, sind vorzugsweise mehrere Lichtschranken und optoelektronische Vorrichtungen an eine Anschalteinheit angeschlossen, die möglichst in unmittelbarer Nähe dieser Einheiten liegt und für das Bedienpersonal gut zugänglich ist. Die Lichtschranken und die optoelektronischen Vorrichtungen sind dann mit kurzen Kabelwegen an die Anschalteinheit anschließbar.

Über die gesamte Länge der Förderstrecke sind vorzugsweise mehrere dieser Anschalteinheiten vorgesehen, die an eine zentrale Steuereinheit oder dergleichen angeschlossen sind.

Zum Anschluss an derartige externe Einheiten weist die optoelektronische Vorrichtung typischerweise einen 15-poligen Sub-D-Steckverbinder auf. Eine vorgegebene Anzahl von Anschlusspins dieses Sub-D-Steckverbinders dient zum Einlesen eines Triggersignals und/oder Schaltsignals, wodurch der Betrieb der optoelektronischen Vorrichtung gesteuert wird. Vorzugsweise zwei weitere Anschlusspins des Sub-D-Steckverbinders dienen zum Anschluss der optoelektronischen Vorrichtung an eine Versorgungsspannung. Über die weiteren Anschlusspins erfolgt die Ausgabe eines Datenprotokolls. Die dabei von der optoelektronischen Vorrichtung ausgelesenen Daten enthalten die Informationen über die Marken, welche von der optoelektronischen Vorrichtung erfasst werden. Die Datenübertragung erfolgt seriell mit gängigen Datenprotokollen über RS 232-, RS 485- oder CAN-Schnittstellen oder dergleichen.

Derartige Sub-D-Steckverbinder sind zwar ohne Werkzeuge anschließbar, jedoch ist das Bauvolumen derartiger Steckverbinder unerwünscht groß. Damit sind zwangsläufig nicht nur die Baugrößen der optoelektronischen Vorrichtungen entsprechend groß, sondern auch die Baugrößen der Anschalteinheiten, an welche vorzugsweise mehrere optoelektronische Vorrichtungen anschließbar sind.

Alternativ kann der Anschluss der optoelektronischen Vorrichtungen an externe Einheiten wie zum Beispiel Anschalteinheiten mittels PG-Kabelverschraubungen erfolgen. In diesem Fall sind an der Außenseite der Anschalteinheit in geeigneter Anzahl mehrere PG-Kabelverschraubungen vorgesehen. Die Litzen eines von der optoelektronischen Vorrichtung zur Anschalteinheit geführten Kabels werden durch die PG-Kabelverschraubungen geführt und im Innern der Anschalteinheit an vorgegebenen Anschlüssen verlötet. Alternativ können im Innern der Anschalteinheiten auch Klemmleisten zum Anschluss der Litzen der Kabel vorgesehen sein.

Nachteilig bei derartigen Anschlüssen ist neben dem hohen Platzbedarf insbesondere auch der relativ hohe Montageaufwand.

Ein weiterer Nachteil besteht darin, dass bei Anordnungen von optoelektronischen Vorrichtungen und Lichtschranken zu deren Steuerungen in den zugeordneten externen Einheiten verschiedene Anschlüsse vorgesehen werden müssen, da derartige Lichtschranken Steckverbinder aufweisen, deren Ausführungsformen sich von den Anschlüssen der optoelektronischen Vorrichtungen unterscheiden. Der konstruktive Aufwand zur Bereitstellung von Anschlüssen externer Einheiten, an welche sowohl optoelektronische Vorrichtungen als auch Lichtschranken anschließbar sind, ist daher unerwünscht hoch.

Der Erfindung liegt die Aufgabe zugrunde, eine Vorrichtung der eingangs genannten Art bereitzustellen, die mit geringem Montageaufwand und möglichst geringem Platzbedarf an externe Einheiten anschließbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung dient zur Erfassung von Marken innerhalb eines Lesebereichs und weist wenigstens einen Sendelichtstrahlen emittierenden Sender sowie wenigstens einen Empfangslichtstrahlen empfangenden Empfänger auf. Die Sendelichtstrahlen sind auf die Marken geführt und die von den Marken zurückreflektierten Empfangslichtstrahlen treffen auf den Empfänger. Die dabei generierten Empfangssignale werden zur Erfassung der Marken einer Auswerteeinheit zugeführt. Zur Ankopplung an externe Einheiten ist eine Schnittstelle für Niederspannungsschaltgeräte vorgesehen.

Durch die Verwendung von Schnittstellen für Niederspannungsschaltgeräte, insbesondere von Steckverbindern für Niederspannungsschaltgeräte, wird eine Anschlusseinheit für optoelektronische Vorrichtungen bereitgestellt, die ein äußerst geringes Bauvolumen beansprucht und zudem einfach und schnell montierbar ist.

Niederspannungsschaltgeräte stellen gemäß der europäischen Norm EN 60947 binäre Schaltgeräte dar, zu welchen insbesondere auch Lichtschranken und Lichttaster gehören. Auch die Steckverbinder dieser Niederspannungsanschlüsse sind genormt und werden somit bei Niederspannungsschaltgeräten universell eingesetzt.

Über wenigstens einen Anschlusspin derartiger genormter Steckverbinder werden binäre Schaltsignale aus den Niederspannungsschaltgeräten an externe Einheiten übertragen.

Der Grundgedanke der Erfindung besteht darin, diese Anschlusspins zur seriellen Datenübertragung bei der erfindungsgemäßen optoelektronischen Vorrichtung zu nutzen. Die zu übertragenden Daten beinhalten dabei die Informationen, die bei der Erfassung der Marken erhalten werden.

Im einfachsten Fall werden diese Marken insbesondere über einen einzelnen Anschlusspin eines derartigen Steckverbinders ausgegeben. Die Anschlusspins zum Anschluss an eine Versorgungsspannung können für die optoelektronische Vorrichtung in gleicher Weise wie für ein Niederspannungsschaltgerät genutzt werden.

Die auf diese Weise für optoelektronische Vorrichtungen nutzbar gemachten Steckverbinder für Niederspannungsschaltgeräte können insbesondere als M12-Steckverbinder ausgebildet sein und weisen ein äußerst geringes Bauvolumen auf. Die mit diesen Steckverbindern ausgestatteten optoelektronischen Vorrichtungen weisen damit selbst ein geringes Bauvolumen auf.

Ein weiterer Vorteil besteht darin, dass derartige Steckverbinder durch Verschrauben einfach und ohne Werkzeuge montiert werden können.

Ein weiterer wesentlicher Vorteil der erfindungsgemäßen Vorrichtung besteht darin, dass deren Anschlüsse mit den Anschlüssen von Niederspannungsschaltgeräten identisch sind.

Durch diese Anschlusskompatibilität wird erreicht, dass die optoelektronischen Vorrichtungen und die Niederspannungsschaltgeräte in identischer Weise an externe Einheiten anschließbar sind.

Beispiele hierfür sind Förderstrecken, an welchen neben optoelektronischen Vorrichtungen als Lichtschranken ausgebildete Niederspannungsschaltgeräte angeordnet sind, die zur Steuerung der optoelektronischen Vorrichtung dienen. Sämtliche dieser Einheiten sind in identischer Weise an externe Anschalteinheiten anschließbar, so dass der konstruktive Aufwand derartiger Anschalteinheiten erheblich reduziert werden kann. Da die Anschlüsse derartiger Anschalteinheiten sowohl für optoelektronische Vorrichtungen als auch für Niederspannungsschaltgeräte genutzt werden können, vereinfacht sich der Anschluss für das Bedienpersonal erheblich. Zudem sind die einzelnen Anschalteinheiten selbst flexibler einsetzbar.

Bei fortlaufender Miniaturisierung der Baugrößen optoelektronischer Vorrichtungen stellt der Steckverbinder eine die Baugrößen wesentlich bestimmende Größe dar. Durch die erfindungsgemäße Verwendung von Steckverbindern für Niederspannungsschaltgeräte kann insbesondere die Baugröße der optoelektronischen Vorrichtungen in derselben Größenordnung wie die Baugrößen von Niederspannungsschaltgeräten liegen.

In einer besonders vorteilhaften Ausführungsform ist die erfindungsgemäße optoelektronische Vorrichtung in einem Gehäuse einer Lichtschranke oder eines Lichttasters integriert. Die optoelektronische Vorrichtung ist somit hinsichtlich ihrer mechanischen Schnittstelle, insbesondere hinsichtlich der Form des Gehäuses und des Steckverbinders, identisch mit einem optischen Niederspannungsschaltgerät.

Dadurch wird insbesondere erreicht, dass die optoelektronische Vorrichtung mit den selben Befestigungsmitteln wie eine Lichtschranke oder ein Lichttaster an einer Halterung oder dergleichen befestigt werden kann.

Damit ist die erfindungsgemäße Vorrichtung nicht nur hinsichtlich der elektrischen Anschlüsse, sondern auch bezüglich der mechanischen Schnittstellen völlig anschlusskompatibel mit einem Niederspannungsschaltgerät, insbesondere einer Lichtschranke oder einem Lichtaster.

Damit ergeben sich insbesondere dann erhebliche Rationalisierungseffekte, wenn die erfindungsgemäße optoelektronische Vorrichtung gemeinsam mit Niederspannungsschaltgeräten an Anlagen oder dergleichen eingesetzt wird.

Die Erfindung wird im nachstehenden anhand der Zeichnungen erläutert. Es zeigen:
- Figur 1:: Schematische Darstellung eines Ausführungsbeispiels der erfindungsgemäßen optoelektronischen Vorrichtung zur Erfassung von Marken.
- Figur 2:: Steckverbinder für die optoelektronische Vorrichtung zum Anschluss an externe Einheiten
a) Draufsicht auf den Steckverbinder.
b) Querschnitt durch den Steckverbinder.
- Figur 3:: Anordnung von optoelektronischen Vorrichtungen und Lichtschranken an einer Förderstrecke zur Erfassung von Marken.

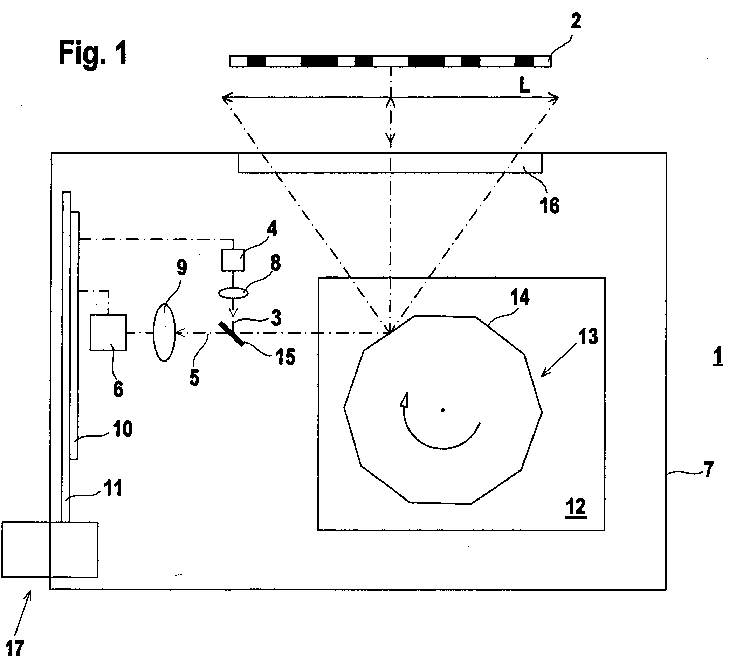

Figur 1 zeigt eine optoelektronische Vorrichtung 1 zum Erfassen von definierten Kontrastmustern aufweisenden Marken.

Im vorliegenden Ausführungsbeispiel ist die optoelektronische Vorrichtung 1 als Barcodelesegerät ausgebildet, welches zum Erfassen von Barcodes 2 dient, welche eine Folge von hellen und dunklen Linienelementen aufweisen. Vorzugsweise bestehen die Linienelemente aus einer Folge von schwarzen und weißen Linienelementen.

Die Barcodes 2 werden innerhalb eines Lesebereichs L von der optoelektronischen Vorrichtung 1 periodisch abgetastet.

Hierzu weist die optoelektronische Vorrichtung 1 einen Sendelichtstrahlen 3 emittierenden Sender 4 und einen Empfangslichtstrahlen 5 empfangenden Empfänger 6 auf.

Der Sender 4 und der Empfänger 6 sind wie die übrigen elektrischen und optischen Komponenten der optoelektronischen Vorrichtung 1 in einem gemeinsamen Gehäuse 7 integriert.

Der Sender 4 ist vorzugsweise von einer Laserdiode gebildet, der Empfänger 6 besteht aus einer Fotodiode oder dergleichen.

Zur Strahlformung der Sendelichtstrahlen 3 ist dem Sender 4 eine Sendeoptik 8 nachgeordnet. Dem Empfänger 6 ist eine Empfangsoptik 9 vorgeordnet, mittels derer die Empfangslichtstrahlen 5 auf den Empfänger 6 fokussiert werden. Zur Verstärkung der am Ausgang des Empfängers 6 anstehenden Empfangssignale kann diesem ein nicht dargestellter Verstärker nachgeordnet sein.

Der Sender 4 und der Empfänger 6 sind an eine Auswerteeinheit 10 angeschlossen. Die Auswerteeinheit 10 ist von einem Mikrocontroller oder dergleichen gebildet. Die Auswerteeinheit 10 sowie weitere nicht gesondert dargestellte elektrische Komponenten der optoelektronischen Vorrichtung 1 ist auf einer ersten Leiterplatte 11 angeordnet. Weiterhin ist eine zweite Leiterplatte 12 im Gehäuse 7 angeordnet. Prinzipiell können auch mehrere Leiterplatten 11, 12 zur Aufnahme der elektrischen Komponenten vorgesehen sein.

Zur Erfassung der Barcodes 2 werden die Sendelichtstrahlen 3 periodisch innerhalb des Lesebereichs L geführt. Hierzu ist eine Ablenkeinheit vorgesehen, über welche sowohl die Sendelichtstrahlen 3 als auch die Empfangslichtstrahlen 5 geführt sind. Anstelle dieser Anordnung kann die optoelektronische Vorrichtung 1 auch eine Mehrfachanordnung von Sendern 4 und/oder Empfänger 6 aufweisen, um die Barcodes 2 innerhalb des Lesebereichs L zu erfassen.

Die Ablenkeinheit ist im vorliegenden Ausführungsbeispiel von einem motorisch getriebenen, rotierenden Polygonspiegelrad 13 gebildet. Das Polygonspiegelrad 13 weist mehrere identische Spiegelflächen 14 auf, wobei im vorliegenden Beispiel acht derartiger Spiegelflächen 14 vorgesehen sind. Die nicht gesondert dargestellten Komponenten zur Ansteuerung des ebenfalls nicht dargestellten Motors zum Antrieb des Polygonspiegelrads 13 sind auf der zweiten Leiterplatte 12 integriert.

Die Sende- 3 und Empfangslichtstrahlen 5 werden jeweils über dieselbe Spiegelfläche 14 des Polygonspiegelrads 13 geführt. Dabei verlaufen die Strahlachsen der auf das Polygonspiegelrad 13 auftreffenden Sendelichtstrahlen 3 und die am Polyggonspiegelrad 13 reflektierten Empfangslichtstrahlen 5 koaxial zueinander. Die koaxiale Strahlführung der Sende- 3 und Empfangslichtstrahlen 5 in diesem Bereich wird beispielsweise mittels eines Umlenkspiegels 15, der wie in Figur 1 dargestellt die Sendelichtstrahlen 3 ablenkt, erreicht. Die Empfangslichtstrahlen 5, die am Polygonspiegelrad 13 reflektiert werden, werden am Umlenkspiegel 15 vorbei zum Empfänger 6 geführt.

Der Sender 4, der Empfänger 6 und das Polygonspiegelrad 13 sind in einer gemeinsamen Ebene angeordnet, wobei die Spiegelflächen 14 vertikal zu dieser Ebene angeordnet sind. Die Sende- 3 und Empfangslichtstrahlen 5 sind damit ebenfalls in dieser Ebene geführt. Die Drehachse des Polygonspiegelrads 13 verläuft senkrecht zu dieser Ebene.

Durch die Drehbewegung des Polygonspiegelrads 13 werden die Sendelichtstrahlen 3 periodisch innerhalb eines Winkelbereichs abgelenkt, welcher den Lesebereich L bildet. Die Größe des Winkelbereichs ist durch die Anzahl der Spiegelflächen 14 des Polygonspiegelrads 13 vorgegeben.

Die an den Spiegelflächen 14 des Polygonspiegelrads 13 reflektierten Sendelichtstrahlen 3 durchsetzen ein Austrittsfenster 16 in der Frontwand des Gehäuses 7. Die Abmessungen des Austrittsfensters 16 sind an die Größe des Winkelbereichs, der von den Sendelichtstrahlen 3 überstrichen wird, angepasst.

Mit den Sendelichtstrahlen 3 wird ein im Abtastbereich angeordneter Barcode 2 periodisch abgetastet. Die am Barcode 2 reflektierten Empfangslichtstrahlen 5 weisen entsprechend dem Muster der Linienelemente des Barcodes 2 eine Amplitudenmodulation auf. Dementsprechend weisen auch die Empfangssignale am Ausgang des Empfängers 6 anstehenden, durch die Empfangslichtstrahlen 5 generierten Empfangssignale eine entsprechende Amplitudenmodulation auf. Diese Amplitudenmodulation der Empfangssignale wird in der Auswerteeinheit 10 zur Dekodierung des jeweiligen Barcodes 2 ausgewertet.

Die auf diese Weise erhaltenen Markeninformationen, im vorliegenden Ausführungsbeispiel Barcodeinformationen, werden von der optoelektronischen Vorrichtung 1 an eine externe Einheit wie zum Beispiel einer Steuereinheit oder eine Rechnereinheit ausgegeben.

Zur Ausgabe der Barcodeinformationen und zum Anschluss an eine externe Versorgungsspannung ist eine Schnittstelle für Niederspannungsschaltgeräte vorgesehen, welche von einem Steckverbinder 17 für Niederspannungsschaltgeräte gebildet ist. Zudem wird über den Steckverbinder 17 von der externen Einheit in die optoelektronische Vorrichtung 1 ein Triggersignal und/oder ein Schaltsignal eingelesen. Das Triggersignal dient zur Ansteuerung der optoelektronischen Vorrichtung 1, das Schaltsignal dient zur Aktivierung der optoelektronischen Vorrichtung 1.

Der Steckverbinder 17 ragt über eine Außenseite des Gehäuses 7 der optoelektronischen Vorrichtung 1 hervor, so dass an diesen ein Kabel oder dergleichen anschließbar ist. Der Steckverbinder 17 ist an die Leiterplatten 11, 12 im Innern der optoelektronischen Vorrichtung 1 angeschlossen.

Derartige Steckverbinder 17 sind gemäß der Norm EN 60947 für Niederspannungsschaltgeräte genormt und bilden somit eine universelle Schnittstelle. Unter den Begriff der Niederspannungsschaltgeräte fallen binäre Schaltgeräte wie zum Beispiel Näherungsschalter sowie binäre Optosensoren wie zum Beispiel Lichtschranken und Lichttaster.

Die so genormten Steckverbinder 17 sind insbesondere als M8- oder M12-Steckverbinder ausgebildet und weisen in verschiedenen Ausführungsformen unterschiedliche Anzahlen und Anordnungen von Anschlusspins 18 auf.

Die für die optoelektronische Vorrichtung 1 verwendeten Steckverbinder 17 weisen wenigstens drei Anschlusspins 18 auf. Prinzipiell können die Steckverbinder 17 auch vier, fünf oder zum Beispiel acht Anschlusspins 18 aufweisen.

In sämtlichen Ausführungsbeispielen sind zwei Anschlusspins 18 zum Anschluss der optoelektronischen Vorrichtung 1 an eine Versorgungsspannung vorgesehen. Die weiteren Anschlusspins 18 stehen zur Übertragung der Barcodeinformationen, von Triggersignalen und/oder Schaltsignalen zur Verfügung. Generell ist wenigstens ein Anschlusspin 18 zur Übertragung der Markeninformationen vorgesehen. Das Triggersignal und/oder das Schaltsignal braucht nicht über einen separaten Anschlusspin 18 übertragen werden. Diese binären Signale können mit den Barcodeinformationen über wenigstens einen gemeinsamen Anschlusspin 18 übertragen werden. Ebenso ist es möglich, diese binären Signale über einen Anschlusspin 18 für die Versorgungsspannung zu übertragen.

Während bei Steckverbindern 17 die an Niederspannungsschaltgeräten angeschlossen sind über die Anschlusspins 18 zur Datenübertragung binäre Daten übertragen werden, werden bei den selben Steckverbindern 17 an optoelektronischen Vorrichtungen 1 über die Anschlusspins 18 zur Datenübertragung Datenprotokolle zur seriellen Datenübertragung der Barcodeinformationen übertragen. Je nach Anzahl der zur Verfügung stehenden Anschlusspins 18 ist das Datenprotokoll in einem vorgegebenen Rahmen frei wählbar und über entsprechende Schnittstellen übertragbar. Beispiele für derartige Schnittstellen sind RS 232-, RS 485- oder CAN-Schnittstellen.

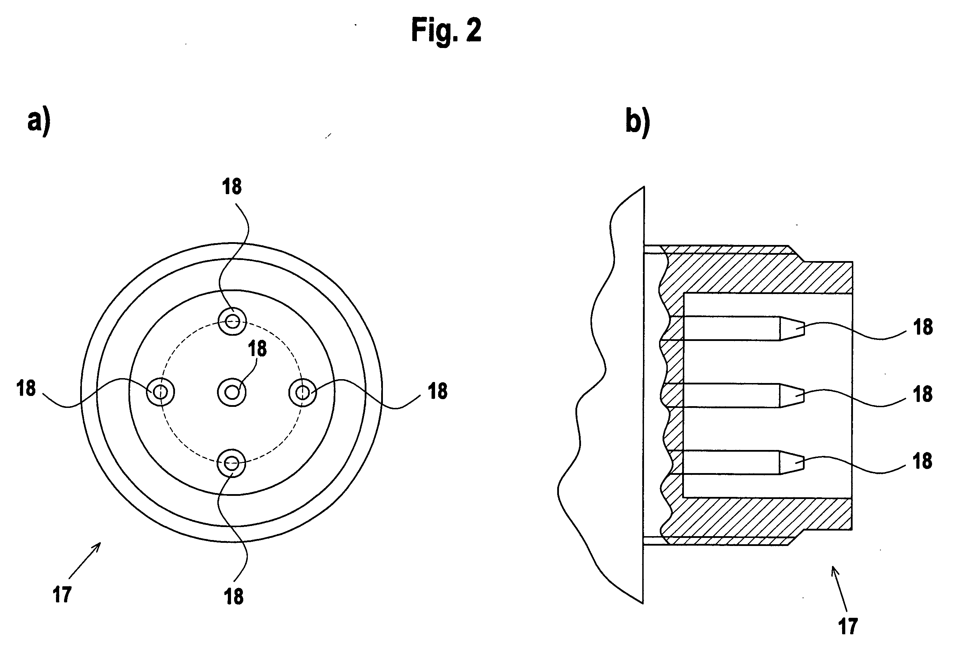

In den Figuren 2a und 2b ist ein Steckverbinder 17 für Niederspannungsschaltgeräte mit fünf Anschlusspins 18 dargestellt. Zwei der Anschlusspins 18 dienen zum Anschluss der optoelektronischen Vorrichtung 1 an eine externe Spannungsversorgung, insbesondere eine Gleichspannungsversorgung. Zwei der Anschlusspins 18 dienen zur seriellen Datenübertragung der Barcodeinformationen. Einer der Anschlusspins 18 dient zum Einlesen von binären Triggerund/oder Schaltsignalen.

Eine Variante eines Steckverbinders 17 gemäß Figur 2 kann derart ausgebildet sein, dass der zentrale Anschlusspin 18 weggelassen wird.

Bei einem derartigen Steckverbinder 17 verbleiben wiederum zwei Anschlusspins 18 zum Anschluss an die Versorgungsspannung. Die beiden weiteren Anschlusspins 18 dienen zur seriellen Datenübertragung der Barcodeinformationen. In diesem Fall wird einer dieser Anschlusspins 18 zur seriellen Datenübertragung für die Übertragung von Triggersignalen und/oder Schaltsignalen mit genutzt.

Das Gehäuse 7, in welchem die optoelektronische Vorrichtung 1 untergebracht ist, entspricht einem Gehäuse 7 für eine Lichtschranke oder einen Lichttaster. Damit weist das Gehäuse 7 der optoelektronischen Vorrichtung 1 dieselben Aufnahmen oder Anschlussmittel für ein Befestigungsmittel wie dies bei einer Lichtschranke oder einem Lichttaster der Fall ist. Damit kann die optoelektronische Vorrichtung 1 mit den selben Befestigungsmitteln wie eine Lichtschranke oder ein Lichttaster an einer Halterung, einer Wand oder dergleichen montiert werden. Die optoelektronische Vorrichtung 1 ist dabei vorzugsweise zu Justagezwecken an einem Befestigungsmittel schwenkbar und verschiebbar gelagert und kann in der gewünschten Endposition fixiert werden.

Die optoelektronische Vorrichtung 1 weist somit dieselbe mechanische Schnittstelle wie ein Niederspannungsschaltgerät, insbesondere eine Lichtschranke oder ein Lichttaster, auf.

Damit ist die optoelektronische Vorrichtung 1 sowohl hinsichtlich ihrer elektrischen als auch ihrer mechanischen Schnittstelle anschlusskompatibel mit Niederspannungsschaltgeräten. Dies ist insbesondere dann vorteilhaft, wenn derartige Einheiten gemeinsam an Anlagen oder Maschinen installiert werden.

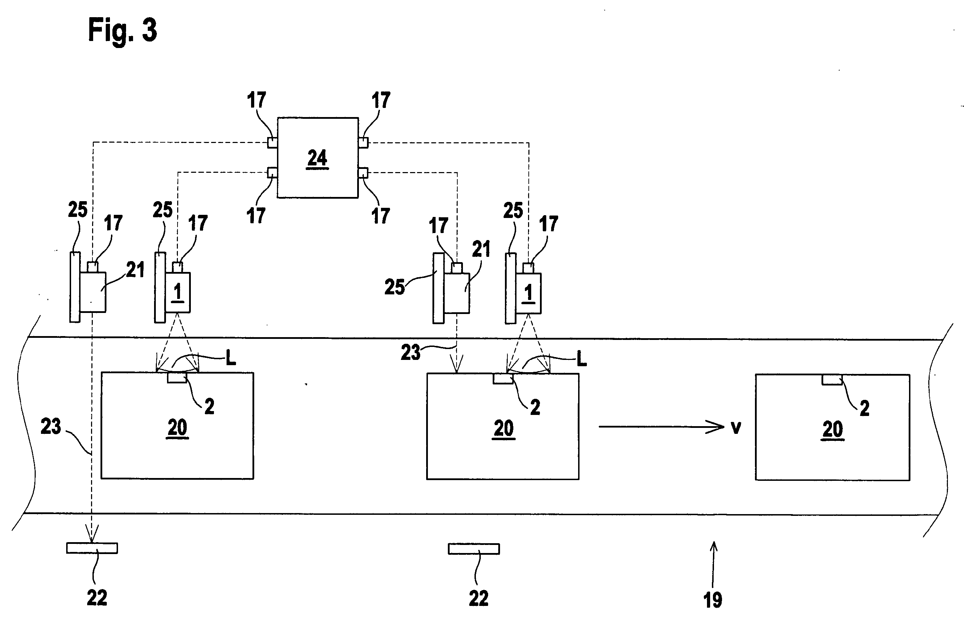

Ein Beispiel für eine derartige Anlage ist in Figur 3 dargestellt. Im vorliegenden Fall ist die Anlage von einer Förderstrecke 19 gebildet, auf welcher Objekte 20 wie zum Beispiel Pakete in einer Förderrichtung v mit einer vorgegebenen Geschwindigkeit bewegt werden.

Im vorliegenden Beispiel ist seitlich auf jedem Objekt 20 ein Barcode 2 angeordnet. Mittels zweier optoelektronischer Vorrichtungen 1, die seitlich an der Förderstrecke 19 montiert sind, werden die Barcodes 2 in vorgegebenen Positionen erfasst. Gleichzeitig erfolgt eine Zuordnung des Objekts 20 zu dem auf diesem angeordneten Barcode 2.

Hierzu ist jeder optoelektronischen Vorrichtung 1 eine Reflexionslichtschranke 21 zugeordnet. Jede Reflexionslichtschranke 21 liegt in Förderrichtung v der Objekte 20 unmittelbar vor der zugeordneten optoelektronischen Vorrichtung 1. Die Reflexionslichtschranke 21 liegt auf der gleichen Seite der Förderstrecke 19 wie die optoelektronische Vorrichtung 1. Auf der gegenüberliegenden Seite der Förderstrecke 19 liegt ein Reflektor 22, auf welchen die von der Reflexionslichtschranke 21 emittierten Lichtstrahlen 23 treffen. Sobald ein Objekt 20 in den Strahlengang der Lichtstrahlen 23 eintritt, wird in der Reflexionslichtschranke 21 ein Schaltsignal "Objekt erkannt" generiert. Dieses Schaltsignal bildet ein Triggersignal, welches in die optoelektronische Vorrichtung 1 eingelesen wird. Durch dieses Triggersignal wird der Lesevorgang in der optoelektronischen Vorrichtung 1 genau dann aktiviert, wenn das Objekt 20 die Reflexionslichtschranke 21 und danach die zugeordnete optoelektronische Vorrichtung 1 passiert. Auf diese Weise ist eine genaue und fehlerfreie Zuordnung des bei dem Lesevorgang erfassten Barcodes 2 zu dem Objekt 20, auf welchem dieser Barcode 2 angebracht ist, gewährleistet.

Die optoelektronischen Vorrichtungen 1 und die Reflexionslichtschranken 21 sind an eine Anschalteinheit 24 angeschlossen. Diese Anschalteinheit 24 ist an eine nicht dargestellte Steuereinheit angeschlossen. Prinzipiell können entlang der Förderstrecke 19 mehrere derartige Anordnungen mit Anschalteinheiten 24 vorgesehen sein, die jeweils an die Steuereinheit angeschlossen sind.

Da die optoelektronischen Vorrichtungen 1 und die Reflexionslichtschranken 21 dieselben Steckverbinder 17 aufweisen, können diese in identischer Weise an die Anschalteinheit 24 angeschlossen werden. Dabei sind an der Anschalteinheit 24 entsprechende Steckverbinder 17 vorgesehen.

Zudem sind die Reflexionslichtschranken 21 und die optoelektronischen Vorrichtungen 1 mit den selben Befestigungsmitteln an nicht dargestellten Halterungen montiert. Im vorliegenden Fall sind die Befestigungsmittel von Schwenkhalterungen 25 gebildet, an welchen die optoelektronischen Vorrichtungen 1 und die Reflexionslichtschranken 21 in gleicher Weise befestigbar sind.

### Bezugszeichenliste

- (1): Optoelektronische Vorrichtung
- (2): Barcode
- (3): Sendelichtstrahlen
- (4): Sender
- (5): Empfangslichtstrahlen
- (6): Empfänger
- (7): Gehäuse
- (8): Sendeoptik
- (9): Empfangsoptik
- (10): Auswerteeinheit
- (11): Leiterplatte
- (12): Leiterplatte
- (13): Polygonspiegelrad
- (14): Spiegelflächen
- (15): Umlenkspiegel
- (16): Austrittsfenster
- (17): Steckverbinder
- (18): Anschlusspin
- (19): Förderstrecke
- (20): Objekt
- (21): Reflexionslichtschranke
- (22): Reflektor
- (23): Lichtstrahlen
- (24): Anschalteinheit
- (25): Schwenkhalterung
- L: Lesebereich
- v: Förderrichtung

## Patentansprüche

1. Optoelektronische Vorrichtung zur Erfassung von Marken innerhalb eines Lesebereichs mit wenigstens einem Sendelichtstrahlen emittierenden Sender und wenigstens einem Empfangslichtstrahlen empfangenden Empfänger, wobei die Sendelichtstrahlen auf die Marken geführt sind und die von den Marken zurückreflektierten Empfangslichtstrahlen auf den Empfänger treffen, wobei die dadurch im Empfänger generierten Empfangssignale zur Erfassung der Marken einer Auswerteeinheit zugeführt sind, **dadurch gekennzeichnet, dass** zur Ankopplung an externe Einheiten eine Schnittstelle für Niederspannungsschaltgeräte vorgesehen ist.

2. Optoelektronische Vorrichtung nach Anspruch 1, **dadurch gekennzeichnet, dass** die Schnittstelle von einem Steckverbinder (17) für Niederspannungsschaltgeräte gebildet ist.

3. Optoelektronische Vorrichtung nach Anspruch 2, **dadurch gekennzeichnet, dass** der Steckverbinder (17) als M8- oder M12-Steckverbinder ausgebildet ist.

4. Optoelektronische Vorrichtung nach einem der Ansprüche 2 oder 3, **dadurch gekennzeichnet, dass** der Steckverbinder (17) wenigstens drei Anschlusspins (18) aufweist.

5. Optoelektronische Vorrichtung nach Anspruch 4, **dadurch gekennzeichnet, dass** zwei Anschlusspins (18) des Steckverbinders (17) zum Anschluss an eine Versorgungsspannung dienen.

6. Optoelektronische Vorrichtung nach Anspruch 5, **dadurch gekennzeichnet, dass** wenigstens ein Anschlusspin (18) zur seriellen Datenübertragung an eine externe Einheit dient.

7. Optoelektronische Vorrichtung nach Anspruch 6, **dadurch gekennzeichnet, dass** über den Anschlusspin (18) oder die Anschlusspins (18) zur seriellen Datenübertragung die bei der Erfassung der Marken gewonnenen Markeninformationen übertragen werden.

8. Optoelektronische Vorrichtung nach Anspruch 7, **dadurch gekennzeichnet, dass** das Datenprotokoll zur Übertragung der Markeninformationen frei wählbar ist.

9. Optoelektronische Vorrichtung nach Anspruch 8, **dadurch gekennzeichnet, dass** das Datenprotokoll über eine RS 232-, eine RS 485- oder eine CAN-Schnittstelle übertragen wird.

10. Optoelektronische Vorrichtung nach einem der Ansprüche 4 - 9, **dadurch gekennzeichnet, dass** wenigstens ein Anschlusspin (18) zum Einlesen eines Triggersignals und/oder Schaltsignals vorgesehen ist.

11. Optoelektronische Vorrichtung nach einem der Ansprüche 4 - 9, **dadurch gekennzeichnet, dass** das Triggersignal und/oder das Schaltsignal über einen Anschlusspin (18) für die Versorgungsspannung einlesbar ist.

12. Optoelektronische Vorrichtung nach einem der Ansprüche 4 - 9, **dadurch gekennzeichnet, dass** das Triggersignal und/oder das Schaltsignal über einen Anschlusspin (18) zur seriellen Datenübertragung einlesbar ist.

13. Optoelektronische Vorrichtung nach einem der Ansprüche 1 - 12, **dadurch gekennzeichnet, dass** diese eine mechanische Schnittstelle aufweist, die anschlusskompatibel mit mechanischen Schnittstellen für Niederspannungsschaltgeräte ist.

14. Optoelektronische Vorrichtung nach Anspruch 13, **dadurch gekennzeichnet, dass** die mechanische Schnittstelle ein Gehäuse (7) für Niederspannungsschaltgeräte umfasst.

15. Optoelektronische Vorrichtung nach Anspruch 14, **dadurch gekennzeichnet, dass** diese in einem Gehäuse (7) für einen Lichttaster oder eine Lichtschranke integriert ist.

16. Optoelektronische Vorrichtung nach einem der Ansprüche 14 oder 15, **dadurch gekennzeichnet, dass** das Gehäuse (7) Anschlüsse für Befestigungsmittel aufweist mittels derer das Gehäuse (7) an einer Halterung befestigbar ist.

17. Optoelektronische Vorrichtung nach Anspruch 16, **dadurch gekennzeichnet, dass** diese an den Befestigungsmitteln zu Justagezwecken schwenkbar und/oder verschiebbar gelagert und in einer Endposition fixierbar ist.
